(19)

Europäisches Patentamt

European Patent Office

Office européen des brevets

(11) **EP 3 503 435 A1**

(12) **EUROPEAN PATENT APPLICATION**

(43) Date of publication:
26.06.2019 Bulletin 2019/26

(21) Application number: **17210541.3**

(22) Date of filing: **22.12.2017**

(51) Int Cl.:
*H04B 10/2581* (2013.01)   *H04B 10/532* (2013.01)
*H04B 10/50* (2013.01)    *H04J 14/04* (2006.01)
*H04J 14/06* (2006.01)    *H04B 10/25* (2013.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Nokia Solutions and Networks Oy**
**02610 Espoo (FI)**

(72) Inventors:
• CHARLET, Gabriel
  **91620 NOZAY (FR)**
• SIMONNEAU, Christian
  **91620 NOZAY (FR)**

(74) Representative: **Nokia EPO representatives**
**Nokia Technologies Oy**
**Karaportti 3**
**02610 Espoo (FI)**

(54) **REDUCTION OF INTER-MODE CROSSTALK IN OPTICAL SPACE-DIVISION-MULTIPLEXING COMMUNICATION SYSTEMS**

(57)     An optical SDM system configured to transmit modulated optical signals using a pair of guided modes of a few-mode or multimode fiber such that the two modes of the pair carry light of mutually orthogonal polarizations. Some embodiments are configured for bidirectional signal transport using a different respective pair of guided modes of the fiber for each signal-propagation direction.

Some embodiments are configured to use wavelength-division multiplexing in addition to space-division multiplexing. The use of mutually orthogonal polarizations in the disclosed manner can be beneficial, e.g., in that it is capable of significantly reducing the level of inter-mode crosstalk compared to that observed in comparable conventional optical SDM systems.

*FIG. 1*

100

EP 3 503 435 A1

## Description

BACKGROUND

Field

The present disclosure relates to optical communication equipment and, more specifically but not exclusively, to methods and apparatus for transporting optical communication signals using space-division multiplexing.

Description of the Related Art

This section introduces aspects that may help facilitate a better understanding of the disclosure. Accordingly, the statements of this section are to be read in this light and are not to be understood as admissions about what is in the prior art or what is not in the prior art.

A multimode fiber (MMF) can provide a higher transmission capacity than a single-mode fiber, e.g., by means of space-division multiplexing (SDM). More specifically, different guided modes of a multimode fiber can be populated with different modulated optical signals or different linear combinations of a given set of independently modulated optical signals. The original data can then be recovered at the receiver by appropriately demultiplexing and de-convolving the resulting received optical SDM signal. However, inter-mode crosstalk in the corresponding optical SDM communication system can seriously degrade the performance characteristics thereof and, as such, needs to be dealt with.

SUMMARY OF SOME SPECIFIC EMBODIMENTS

Disclosed herein are various embodiments of an optical SDM system configured to transmit modulated optical signals using a pair of guided modes of a few-mode or multimode fiber such that the two modes of the pair carry light of mutually orthogonal polarizations. Some embodiments are configured for bidirectional signal transport using a different respective pair of guided modes of the fiber for each signal-propagation direction. Some embodiments are configured to use wavelength-division multiplexing in addition to space-division multiplexing. The use of mutually orthogonal polarizations in the disclosed manner can be beneficial, e.g., in that it is capable of significantly reducing the level of inter-mode crosstalk compared to that observed in comparable conventional optical SDM systems.

According to an example embodiment, provided is an apparatus comprising: an optical transmitter configured to generate a first modulated optical signal and a second modulated optical signal, each of the first and second modulated optical signals having a first carrier wavelength and being generated using a different respective data stream; and a spatial-mode multiplexer configured to optically couple the optical transmitter to an optical fiber in a manner that enables the optical transmitter to: transmit the first modulated optical signal by way of a first guided mode of the optical fiber; and transmit the second modulated optical signal by way of a second guided mode of the optical fiber, the second guided mode being different from the first guided mode; and wherein the optical transmitter and the spatial-mode multiplexer are connected such that a polarization of light of the first modulated optical signal being coupled into the first guided mode and a polarization of light of the second modulated optical signal being coupled into the second guided mode are mutually orthogonal.

According to another example embodiment, provided is an optical communication method comprising the steps of: configuring an optical transmitter to generate a first modulated optical signal and a second modulated optical signal, each of the first and second modulated optical signals having a first carrier wavelength and being generated using a different respective data stream; and configuring a spatial-mode multiplexer to optically couple the optical transmitter to an optical fiber in a manner that enables the optical transmitter to: transmit the first modulated optical signal by way of a first guided mode of the optical fiber; and transmit the second modulated optical signal by way of a second guided mode of the optical fiber, the second guided mode being different from the first guided mode; and wherein the optical transmitter and the spatial-mode multiplexer are connected such that a polarization of light of the first modulated optical signal being coupled into the first guided mode and a polarization of light of the second modulated optical signal being coupled into the second guided mode are mutually orthogonal.

BRIEF DESCRIPTION OF THE DRAWINGS

Other aspects, features, and benefits of various disclosed embodiments will become more fully apparent, by way of example, from the following detailed description and the accompanying drawings, in which:

FIG. 1 shows a block diagram of an optical SDM communication system according to an embodiment;
FIGs. 2A-2B graphically illustrate a reduction of inter-mode crosstalk that can be achieved in the communication system of FIG. 1 according to an embodiment;
FIG. 3 shows a block diagram of an optical SDM communication system according to another embodiment;
FIG. 4 shows a block diagram of an optical transceiver that can be used in the communication system of FIG. 3 according to an embodiment;
FIG. 5 shows a block diagram of an optical transceiver that can be used in the communication system of FIG. 3 according to another embodiment; and
FIG. 6 shows a block-diagram of an electro-optical device that can be used in an optical transmitter of FIG. 4 or 5 according to an embodiment.

DETAILED DESCRIPTION

For a given wavelength $\lambda$, an optical fiber can support multiple guided modes if the normalized frequency parameter $V$ (also referred to as the $V$ number) is greater than about 2.405. Eq. (1) gives the expression for $V$:

$$V = \frac{2\pi a}{\lambda} NA \qquad (1)$$

where $a$ is the fiber-core radius, and $NA$ is the numerical aperture. For a step-index fiber, the numerical aperture is given by Eq. (2):

$$NA = \sqrt{n_1^2 - n_2^2} \qquad (2)$$

where $n_1$ is the refractive index of the fiber core, and $n_2$ is the refractive index of the fiber cladding.

The guided modes of the fiber can generally be classified as (i) transverse electric (TE) modes, for which the axial component of the electric field is zero; (ii) transverse magnetic (TM) modes, for which the axial component of the magnetic field is zero; and (iii) HE or EH modes, for which neither the axial component of the electric field nor the axial component of the magnetic field is zero. The designation of HE or EH depends on which of the electric (E) and magnetic (H) field components is dominant.

The refractive-index profiles of most step-index optical fibers used in optical communications links have a relatively small (e.g., smaller than about 0.05) contrast $\Delta$, which makes these fibers only weakly guiding. Eq. (3) gives the definition of $\Delta$ for a step-index fiber:

$$\Delta = \frac{n_1 - n_2}{n_1} \qquad (3)$$

In the approximation of weak guidance for generally cylindrical fibers, the TE, TM, HE, and EH guided modes become the modes that are conventionally referred to as the linearly polarized (LP) modes.

The following notation is usually adhered to in the description of the LP modes. Each LP mode is designated using two integer indices, e.g., in the form of subscripts: $LP_{jk}$. The first integer index (j) gives the number of $2\pi$-sized phase increments in the electric field per one azimuthal rotation about the fiber axis (e.g., the Z-coordinate axis). The second integer index (k) gives the number of electric-field nodes in the radial dimension, with the zero field at the outer edge of the electric-field distribution also counted as a radial node. Some of the LP modes are additionally given a designating letter, such as a, b, etc. The letter follows the two integer indices and is used to distinguish certain degenerate modes in the group of degenerate modes indicated by the preceding integer indices "jk." In addition, each LP mode can have two different polarizations, e.g., an X polarization and a Y polarization, where X and Y are the two transverse (i.e., orthogonal to the fiber axis) coordinate axes.

Representative intensity and electric-field distributions of several low-order LP modes are graphically shown, e.g., in U.S. Patent No. 8,705,913, which is incorporated herein by reference in its entirety.

For example, the fundamental LP mode ($LP_{01}$) has an intensity profile that is similar to that of a Gaussian beam. The $LP_{01}$ mode corresponds to the $HE_{11}$ mode of a strongly guiding fiber.

The next lowest-order LP mode ($LP_{11}$) has an intensity profile comprising two intensity peaks characterized by a phase difference of 180 degrees between the corresponding electric fields. In the $LP_{11a}$ mode, the intensity peaks are lined up along the X-axis. In the $LP_{11b}$ mode, the intensity peaks are similarly lined up along the Y-axis. The $LP_{11a}$ and $LP_{11b}$ modes correspond to different linear combinations of the $TE_{01}$, $TM_{01}$, and $HE_{21}$ modes of a strongly guiding fiber. If the $V$ number (see Eq. (1)) is in the range between about 2.405 and about 3.9, then the $LP_{01}$, $LP_{11a}$, and $LP_{11b}$ modes are typically the only guided modes supported by the fiber.

The number of supported LP modes further increases, typically in a stepwise manner, with an increase of the $V$ number. As indicated by Eq. (1), the $V$ number can increase with an increase of the fiber-core radius, an increase of the numerical aperture, and/or a decrease of the wavelength $\lambda$. For a given (e.g., already installed) optical fiber, the fiber-core radius and the numerical aperture are fixed constants. In this situation, the $V$ number can still be changed by changing the wavelength $\lambda$ of the optical signal. Due to the number of supported LP modes being a stepped function of the $V$ number, the optical spectrum can be divided into a plurality of spectral bands such that, within each particular spectral band of the plurality, the number of supported LP modes is a respective constant that does not depend on the wavelength $\lambda$ within that spectral band.

For example, a given fiber is a single-mode fiber for any wavelength $\lambda$ that satisfies the following inequality:

$$\lambda > \frac{2\pi a}{2.405} NA \qquad (4)$$

As such, Eq. (4) defines a spectral band within which the number of supported LP modes is one, regardless of the wavelength $\lambda$ within that spectral band. The supported guided mode is the fundamental mode $LP_{01}$.

The same fiber is a three-mode fiber for any

wavelength $\lambda$ that satisfies the following inequality:

$$\frac{2\pi a}{3.9}NA < \lambda < \frac{2\pi a}{2.405}NA \qquad (5)$$

The supported guided modes are the $LP_{01}$, $LP_{11a}$, and $LP_{11b}$ modes. As such, Eq. (5) defines a next spectral band of the plurality, within which the number of supported LP modes is three, regardless of the wavelength $\lambda$ within that spectral band, and so on.

As used herein, the term "few-mode fiber" (FMF) refers to a multimode fiber that supports fewer than fifteen guided modes at the carrier wavelength $\lambda$. The more-general term "multimode fiber" (MMF) should be construed to also cover "few-mode fibers." In practice, multimode fibers are typically implemented to support up to approximately one hundred guided modes at the carrier wavelength $\lambda$.

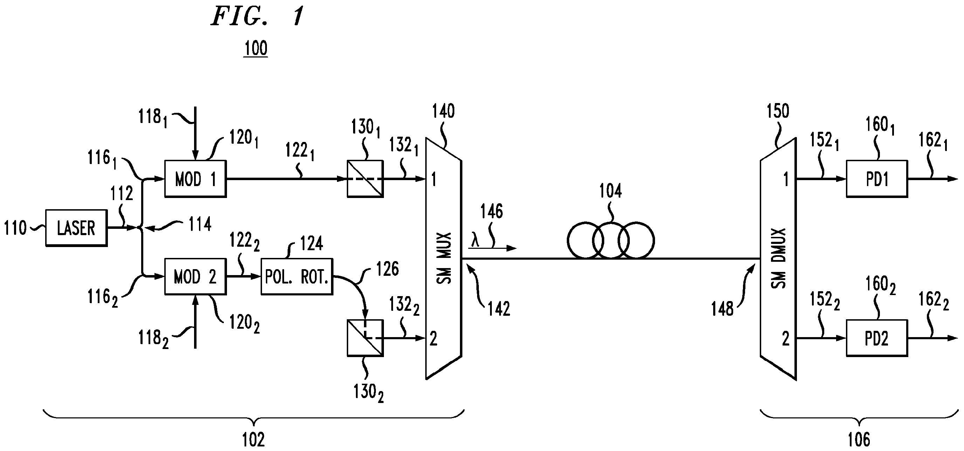

FIG. 1 shows a block diagram of an optical SDM communication system 100 according to an embodiment. System 100 comprises an optical transmitter 102 and an optical receiver 106 connected to one another using an optical fiber 104. At the carrier wavelength $\lambda$ used by optical transmitter 102 and optical receiver 106, optical fiber 104 operates as an FMF or an MMF.

Transmitter 102 operates to generate an optical SDM signal 146 that is coupled into optical fiber 104 such that: (i) a first guided mode of optical fiber 104 receives a first SDM component of optical SDM signal 146 modulated to carry an input data stream $118_1$; and (ii) a second guided mode of optical fiber 104 receives a second SDM component of optical SDM signal 146 modulated to carry an input data stream $118_2$. The light of the first and second SDM components of optical SDM signal 146 has mutually orthogonal polarizations, illustratively the X- and Y-polarizations, respectively. As an example, the first guided mode of optical fiber 104 can be the $LP_{01}$ mode. The second guided mode of optical fiber 104 can be the $LP_{11a}$ mode. A person of ordinary skill in the art will understand that other guided modes of optical fiber 104 can alternatively be used as well.

Receiver 106 operates to convert optical SDM signal 146, as received by way of optical fiber 104, into electrical output signals $162_1$ and $162_2$ that can then be processed in downstream circuits (e.g., including a DSP) to recover data streams $118_1$ and $118_2$. More specifically, due to the relatively low levels of inter-mode crosstalk in system 100 (as further explained below), signal $162_1$ is primarily modulated with data stream $118_1$ and has a relatively small distortion associated with data stream $118_2$. Similarly, signal $162_2$ is primarily modulated with data stream $118_2$ and has a relatively small distortion associated with data stream $118_1$. As a result, signal $162_1$ can be processed in a relatively straightforward manner, e.g., using conventional signal-processing techniques, to recover data stream $118_1$ with a relatively low bit-error rate (BER). Signal $162_2$ can similarly be processed in a relatively straightforward manner to recover data stream $118_2$ with a relatively low BER.

As shown in FIG. 1, transmitter 102 comprises a laser 110 configured to feed light of carrier wavelength $\lambda$ into optical modulators $120_1$ and $120_2$. More specifically, an optical output beam 112 generated by laser 110 is split into optical beams $116_1$ and $116_2$ using an optical power (e.g., 3-dB) splitter 114. Optical beam $116_1$ is then applied to the input port of modulator $120_1$. Optical beam $116_2$ is similarly applied to the input port of modulator $120_2$. In an example embodiment, optical beams 112, $116_1$, and $116_2$ are linearly polarized and have, e.g., an X-polarization.

In an example embodiment, splitter 114 is configured to operate in a polarization-maintaining manner.

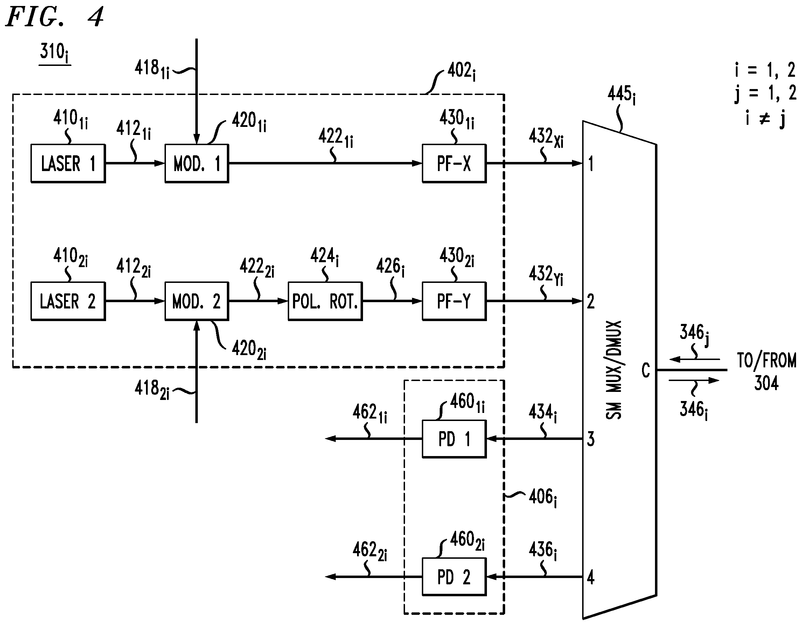

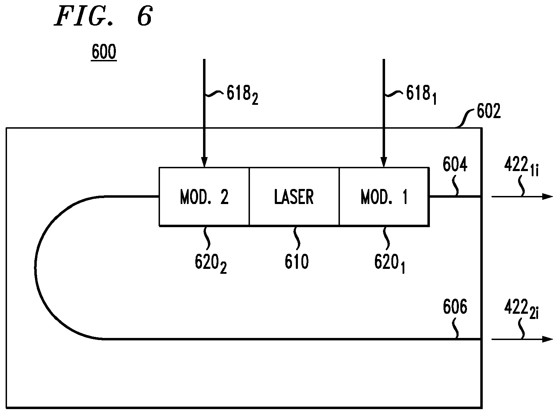

In alternative embodiments, other suitable laser/modulator arrangements can be used to supply input light to optical modulators $120_1$ and $120_2$. For example, two different lasers can be used, e.g., as indicated in FIG. 4. Another example laser/modulator arrangement that can be used in transmitter 102 is shown in FIG. 6. In some embodiments, splitter 114 can be configured to produce optical beams $116_1$ and $116_2$ of unequal intensities.

Optical modulator $120_1$ operates to generate a modulated optical beam $122_1$ by modulating optical beam $116_1$ in response to data stream $118_1$. Optical modulator $120_2$ similarly operates to generate a modulated optical beam $122_2$ by modulating optical beam $116_2$ in response to data stream $118_2$. Typically, modulators $120_1$ and $120_2$ do not significantly change the polarization state of the modulated optical beam with respect to the input beam, which causes each of modulated optical beams $122_1$ and $122_2$ to be primarily X-polarized.

A polarization rotator 124 operates to rotate by ~90 degrees the polarization of modulated optical beam $122_2$, thereby converting the latter into a modulated optical beam 126. Due to this polarization rotation modulated optical beam 126 is primarily Y-polarized.

A polarization filter (e.g., polarizer) $130_1$ is configured to filter optical beam $122_1$ such that the X-polarization component thereof is passed through as a filtered optical beam $132_1$, while the Y-polarization component thereof is rejected or significantly attenuated. A polarization filter (e.g., polarizer) $130_2$ is similarly configured to filter optical beam 126 such that the Y-polarization component thereof is passed through as a filtered optical beam $132_2$, while the X-polarization component thereof is rejected or significantly attenuated. Filtered optical beams $132_1$ and $132_2$ are then applied to input ports 1 and 2, respectively, of a spatial-mode multiplexer (SM MUX) 140 as indicated in FIG. 1.

In the example embodiment shown in FIG. 1, each of polarization filters $130_1$ and $130_2$ is shown as being implemented using a conventional polarization splitter. A person of ordinary skill in the art will understand that, in alternative embodiments, other types of polarization filters can also be used to implement polarization

filters $130_1$ and $130_2$. Better results are typically obtained when the various optical lines that carry optical signals between laser **110** and SM MUX **140** are implemented using polarization-maintaining optical fibers and/or waveguides.

In some embodiments, polarization filters $130_1$ and $130_2$ may not be required and, as such, may be removed (or not be present) in transmitter **102**. This situation may occur, e.g., when the upstream optical components operate such that: (i) optical beam $122_1$ already has a substantially pure X-polarization; and (ii) optical beam **126** already has a substantially pure Y-polarization. As used herein, the term "substantially pure" should be construed to mean that the optical power of Y-polarized light in beam $122_1$ and the optical power of X-polarized light in beam **126** is each below a predetermined threshold. In various embodiments, this predetermined threshold can be, e.g., ~10%, ~5%, or ~2% of the total optical power of the beam.

SM MUX **140** operates to spatially shape (e.g., phase and intensity filter) optical beams $132_1$ and $132_2$ received at input ports **1** and **2**, respectively, to cause each of the resulting spatially shaped optical beams to have a transverse electric-field distribution that substantially matches the electric-field distribution of the corresponding guided mode of optical fiber **104**, which is connected to an output port **142** of the SM MUX. Typically, the spatial shaping of the beams performed in SM MUX **140** does not significantly alter the polarization state of the corresponding light. SM MUX **140** then operates to combine the spatially shaped beams while substantially preserving the electric-field distributions and polarization states thereof, and applies the resulting combined optical beam to output port **142**, thereby launching optical SDM signal **146** into optical fiber **104** toward receiver **106.**

As shown in FIG. 1, receiver **106** comprises a spatial-mode demultiplexer (SM DMUX) **150** having an input port **148** and output ports **1** and **2**. Input port **148** is connected to receive light from optical fiber **104**. Output ports **1** and **2** are connected to apply light to photodetectors $160_1$ and $160_2$, respectively. In response to the light received from output ports **1** and **2** of SM DMUX **150**, photodetectors $160_1$ and $160_2$ generate electrical output signals $162_1$ and $162_2$, respectively.

SM DMUX **150** operates to: (i) split into two portions the optical SDM signal **146** received from optical fiber **104** at the input port **148**; and (ii) spatially shape (e.g., phase and intensity filter) each of the two portions to extract therefrom the light received via the respective one of the two guided modes of optical fiber **104** originally populated by signal **146**. The resulting modulated optical signals $152_1$ and $152_2$ are then directed to photodetectors $160_1$ and $160_2$, respectively. Similar to the spatial shaping of the optical beams performed in SM MUX **140**, the spatial shaping of the optical beams performed in SM DMUX **150** does not significantly alter the polarization state of the corresponding light.

Typically, the principal polarization axes X and Y of transmitter **102** do not coincide with the principal polarization axes x and y of receiver **106**. As a result, optical signal $152_1$ typically has both x- and y-polarization components, and optical signal $152_2$ also has both x- and y-polarization components. However, the overall polarization state of optical signals $152_1$ and $152_2$ is such that they have approximately orthogonal polarizations.

Due to the mutually orthogonal polarizations of optical beams $132_1$ and $132_2$, optical signals $152_1$ and $152_2$ exhibit relatively low levels of inter-mode crosstalk. More specifically, optical signal $152_1$ is such that it primarily carries light corresponding to optical beam $132_1$ and has relatively small contributions from light corresponding to optical beam $132_2$. Similarly, optical signal $152_2$ is such that it primarily carries light corresponding to optical beam $132_2$ and has relatively small contributions from light corresponding to optical beam $132_1$.

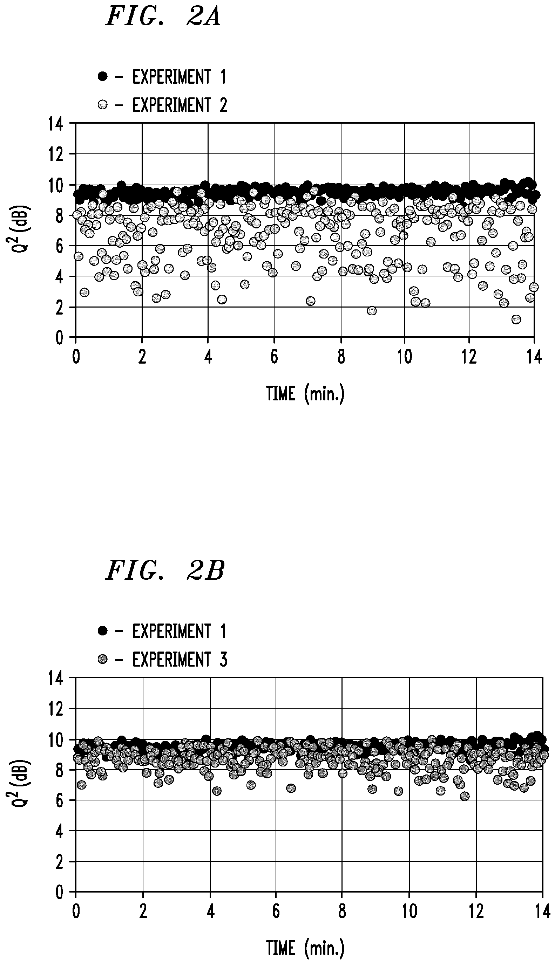

FIGs. 2A-2B graphically illustrate a reduction of inter-mode crosstalk that can be achieved in system **100** according to an embodiment. More specifically, FIGs. 2A-2B graphically show results of three experiments in which the $Q^2$-factor of optical signal $152_1$ was measured and plotted as a function of time. In each experiment, SM MUX **140** was configured to couple optical beams $132_1$ and $132_2$ into the $LP_{11}$ and $LP_{02}$ modes, respectively, of optical fiber **104**. SM DMUX **150** was configured to generate optical signals $152_1$ and $152_2$ by extracting light from the $LP_{11}$ and $LP_{02}$ modes, respectively, of optical fiber **104**. Each of optical modulators $120_1$ and $120_2$ was driven using a respective pseudo-random bit sequence.

FIG. 2A graphically compares the results of Experiment 1 and Experiment 2. In Experiment 1, optical beam $132_1$ is X-polarized, and optical beam $132_2$ is blocked (has no light). In Experiment 2, optical beam $132_1$ is X-polarized, and optical beam $132_2$ is also X-polarized. The relatively low scatter of the data points collected during Experiment 1 indicates a relatively low BER. The relatively high scatter of the data points collected during Experiment 2 indicates a relatively high BER that would typically be unacceptable for a practical system. The increase of the BER in Experiment 2 compared to the BER in Experiment 1 is primarily due to the inter-mode crosstalk.

FIG. 2B graphically compares the results of Experiment 1 and Experiment 3. The results of Experiment 1 are shown in both FIGs. 2A and 2B as a reference for Experiments 2 and 3, respectively. In Experiment 3, optical beam $132_1$ is X-polarized, and optical beam $132_2$ is Y-polarized. The increased scatter of the data points collected during Experiment 3 compared to that in Experiment 1 again indicates an increased BER due to the inter-mode crosstalk. However, the scatter of the data points collected during Experiment 3 is significantly reduced compared to that in Experiment 2 (see FIG. 2A). The latter result illustrates a BER decrease due to the reduction of the inter-mode crosstalk that can be achieved in the above-described embodiment of system **100**, wherein optical beams $132_1$ and $132_2$ have mutually orthogonal

polarizations.

Referring back to FIG. 1, in some embodiments, SM MUX **140** and SM DMUX **150** can be implemented using two instances (nominal copies) of the same physical device, with one instance of the device being configured to transmit light in one direction, and the other instance of the device being configured to transmit light in the opposite direction. Example optical circuits and devices that can be used to implement SM MUX **140** and SM DMUX **150** are disclosed, e.g., U.S. Patent Nos. 8,705,913, 8,355,638, 8,320,769, 7,174,067, and 7,639,909, and U.S. Patent Application Publication Nos. 2016/0233959 and 2015/0309249, all of which are incorporated herein by reference in their entirety. Some embodiments can benefit from the use of some of the optical circuits and devices described in the following publications: (1) Daniele Melati, Andrea Alippi, and Andrea Melloni, "Reconfigurable Photonic Integrated Mode (De)Multiplexer for SDM Fiber Transmission," Optics Express, 2016, v. 24, pp. 12625-12634; (2) A. M. Velazquez-Benitez, J. E. Antonio-López, J. C. Alvarado-Zacarias, et al., "Scaling the Fabrication of Higher Order Photonic Lanterns Using Microstructured Preforms," ECOC 2015, paper ID 0728; (3) Kaoutar Benyahya, Christian Simonneau, Amirhossein Ghazisaeidi, et al., "5Tb/s Transmission over 2.2 km of Multimode OM2 Fiber with Direct Detection Thanks to Wavelength and Mode Group Multiplexing," OFC 2017, paper ID: M2D.2; (4) R. Ryf, M. A. Mestre, A. H. Gnauck, et al., "Low-Loss Mode Coupler for Mode-Multiplexed Transmission in Few-Mode Fiber," OFC/NFOEC 2012; and (5) Nicolas Barre, Bertrand Denolle, Pu Jian, et al., "Broadband, Mode-Selective 15-Mode Multiplexer Based on Multi-Plane Light Conversion," OFC 2017, paper ID: Th2A.7, all of which are also incorporated herein by reference in its entirety.

In an example embodiment, each of photodetectors **160₁** and **160₂** is configured to carry out direct (e.g., square-law) detection of the corresponding one of optical signals **152₁** and **152₂**. In this case, each of the corresponding electrical signals **162₁** and **162₂** is proportional to the optical power (squared amplitude of the electric field) of the respective one of optical signals **152₁** and **152₂**. In some alternative embodiments, coherent detection may be used instead of direct detection at receiver **106**, in which case each of the corresponding electrical signals **162₁** and **162₂** is proportional to the amplitude of the electric field of the respective one of optical signals **152₁** and **152₂**.

In general, any pair of guided modes may be selected for generating optical SDM signal **146** at transmitter **102**. However, it may be beneficial (from the implementation-complexity viewpoint) if the two selected guided modes do not belong to the same group of degenerate modes. As an example, if the guided mode corresponding to optical beam **132₁** is the $LP_{11a}$ mode, then it is generally beneficial to choose a guided mode other than the $LP_{11b}$ mode for optical beam **132₂**.

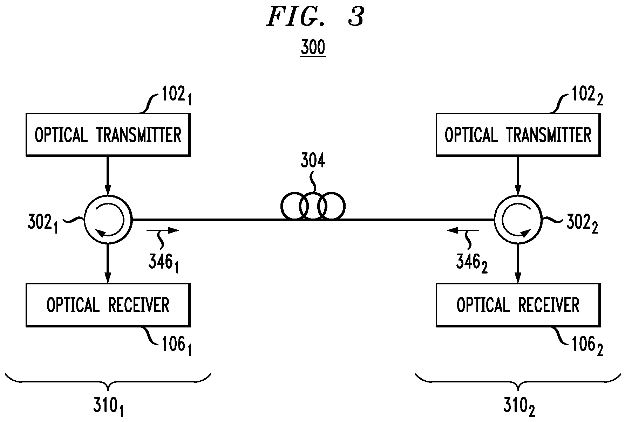

FIG. 3 shows a block diagram of an optical SDM communication system **300** according to another embodiment. System **300** differs from system **100** (FIG. 1) in that system **300** is a bidirectional (rather than a unidirectional) system. As such, system **300** employs an optical fiber **304** configured to carry optical signals in both directions. For example, optical fiber **304** is shown in FIG. 3 as being configured to carry (i) an optical SDM signal **346₁** from an optical transceiver **310₁** to an optical transceiver **310₂** and (ii) an optical SDM signal **346₂** from optical transceiver **310₂** to optical transceiver **310₁**. One possible embodiment of an optical transceiver **310** is explicitly shown in FIG. 3. Another possible embodiment of an optical transceiver **310** is shown in FIG. 4.

In the shown embodiment, optical transceiver **310ᵢ** (where i=1, 2) comprises a respective instance of optical transmitter **102** and a respective instance of optical receiver **106** (which are labeled **102ᵢ** and **106ᵢ**, respectively) coupled to optical fiber **304** using an optical circulator **302ᵢ**. In this manner, optical transmitter **102₁** is configured to launch optical SDM signal **346₁** into optical fiber **304**, which signal is then received at the remote end of the fiber by optical receiver **106₂**. Optical transmitter **102₂** is similarly configured to launch optical SDM signal **346₂** into optical fiber **304**, which signal is then received at the remote end of the fiber by optical receiver **106₁**.

Optical transmitter **102₁** and optical receiver **106₂** are configured to communicate using a first pair of guided modes of optical fiber **304**. Optical transmitter **102₂** and optical receiver **106₁** are configured to communicate using a second pair of guided modes of optical fiber **304**. These first and second pairs of guided modes are selected such that they do not have any modes in common. If degenerate modes of optical fiber **304** are used to carry signals **346₁** and **346₂**, then it is beneficial to select the four guided modes such that that they do not include two modes belonging to the same group of degenerate modes of that optical fiber.

As an example, the following four guided modes of optical fiber **304** may be selected for use in one possible embodiment of system **300**: (i) the $LP_{01}$ and $LP_{11a}$ for generating optical SDM signal **346₁** at transceiver **310₁**; and (ii) the $LP_{21a}$ and $LP_{02}$ for generating optical SDM signal **346₂** at transceiver **310₂**. A person of ordinary skill in the art will understand that other mode combinations may alternatively be selected for use in system **300** as well.

FIG. 4 shows a block diagram of an optical transceiver **310ᵢ** according to an embodiment. Transceiver **310ᵢ** comprises a two-channel optical transmitter **402ᵢ**, a two-channel optical receiver **406ᵢ**, and an SM MUX/DMUX **445ᵢ**. SM MUX/DMUX **445ᵢ** is configured to couple transmitter **402ᵢ** and receiver **406ᵢ** to optical fiber **304** (also see FIG. 3).

Optical transmitter **402ᵢ** is configured to generate modulated optical signals **432ₓᵢ** and **432ᵧᵢ**. Optical signal **432ₓᵢ** has the X-polarization and is configured to carry data of an input data stream **418₁ᵢ**. Optical signal **432ᵧᵢ** has the Y-polarization and is configured to carry data of an input data stream $418_{2i}$.

Optical transmitter $402_i$ comprises a laser $410_{1i}$, an optical modulator $420_{1i}$, and an X-polarization filter $430_{1i}$ that operate to generate optical signal $432_{Xi}$. More specifically, laser $410_{1i}$ is configured to feed an optical beam $412_{1i}$ of carrier wavelength $\lambda$ into optical modulators $420_{1i}$. Optical modulator $420_{1i}$ is configured to generate a modulated optical beam $422_{1i}$ by modulating optical beam $412_{1i}$ in response to data stream $418_{1i}$. Polarization filter $430_{1i}$ is configured to filter optical beam $422_{1i}$ such that the X-polarization component thereof is passed through as optical signal $432_{Xi}$, while the Y-polarization component thereof is rejected or significantly attenuated.

Optical transmitter $402_i$ further comprises a laser $410_{2i}$, an optical modulator $420_{2i}$, an optional polarization rotator $424_i$, and a Y-polarization filter $430_{2i}$ that operate to generate optical signal $432_{Yi}$. More specifically, laser $410_{2i}$ is configured to feed an optical beam $412_{2i}$ of carrier wavelength $\lambda$ into optical modulators $420_{2i}$. Optical modulator $420_{2i}$ is configured to generate a modulated optical beam $422_{2i}$ by modulating optical beam $412_{2i}$ in response to data stream $418_{2i}$. Polarization rotator $424_i$ operates to rotate by ~90 degrees the polarization of modulated optical beam $422_2$, thereby converting the latter into a modulated optical beam $426_i$. Polarization filter $430_{2i}$ is configured to filter optical beam $426_i$ such that the Y-polarization component thereof is passed through as optical signal $432_{Yi}$, while the X-polarization component thereof is rejected or significantly attenuated.

In some embodiments, lasers $410_{1i}$ and $410_{2i}$ can be configured to generate optical beams $412_{1i}$ and $412_{2i}$, respectively, such that these optical beams have nominally the same carrier wavelength $\lambda$. However, these two optical beams are not required to be phase or frequency locked to one another. In some embodiments, laser $410_{1i}$ can be a nominal copy of laser $410_{2i}$.

In some embodiments, lasers $410_{1i}$ and $410_{2i}$ can be configured to generate optical beams $412_{1i}$ and $412_{2i}$, respectively, such that these optical beams have different or slightly different carrier wavelengths $\lambda_1$ and $\lambda_2$. In this case, coherent crosstalk is inhibited. As a result, the overall level of inter-mode crosstalk may be reduced.

In some embodiments, lasers $410_{1i}$ and $410_{2i}$ can be replaced by a single laser configured to feed light of carrier wavelength $\lambda$ into both optical modulators $420_{1i}$ and $420_{2i}$. For example, in one of such embodiments, such a single laser can be connected to optical modulators $420_{1i}$ and $420_{2i}$ using an optical splitter in a manner similar to that shown in FIG. 1. The use of a single laser can reduce the cost at the expense of making the corresponding system relatively more prone to inter-mode crosstalk.

In some embodiments, a single laser can have an optical cavity having two end couplers, each of which can let light out of the cavity (see, e.g., FIG. 6). In this case, one of the end couplers can be optically connected to feed light into optical modulator $420_{1i}$, while the other one of the end couplers can be optically connected to feed light into optical modulator $420_{2i}$.

Optical receiver $406_i$ comprises photodetectors $460_{1i}$ and $460_{2i}$ that are configured to generate electrical output signals $462_{1i}$ and $462_{2i}$, respectively, in response to optical signals $434_i$ and $436_i$, respectively, received from SM MUX/DMUX $445_i$.

In an example embodiment, SM MUX/DMUX $445_i$ has five optical ports that include a common port **C** and plural ports **1-4**, each of which is internally connected to port **C**. Port **C** is externally connected to optical fiber **304** as indicated in FIG. 4. Ports **1-4** are externally connected to transmitter $402_i$ and receiver $406_i$ as further indicated in FIG. 4.

In operation, SM MUX/DMUX $445_i$ can launch optical SDM signal $346_i$ into optical fiber **304** by applying appropriate spatial shaping to optical beams $432_{Xi}$ and $432_{Yi}$ received at ports **1** and **2**, respectively, to cause each of the resulting spatially shaped optical beams to have a transverse electric-field distribution that substantially matches the electric-field distribution of the corresponding guided mode of optical fiber **304**. SM MUX/DMUX $445_i$ also outputs optical beams $434_i$ and $436_i$ at ports **3** and **4**, respectively, in response to optical SDM signal $346_i$ received from optical fiber **304** at port **C**. This can be done by: (i) splitting optical SDM signal $346_i$ into two or more portions; and (ii) appropriately spatially shaping each of the two portions directed towards ports **3** and **4** to extract therefrom the light received via the respective guided modes of optical fiber **304**. The resulting modulated optical signals $152_1$ and $152_2$ are then directed to photodetectors $160_1$ and $160_2$, respectively.

In the above indicated example, in which the $LP_{01}$, $LP_{11a}$, $LP_{21a}$, and $LP_{02}$ modes are used in system **300**, SM MUX/DMUX $445_1$ and SM MUX/DMUX $445_2$ can be configured as follows. The spatial shaping performed in SM MUX/DMUX $445_1$ between port **C** and ports **1-4** thereof corresponds to the $LP_{01}$, $LP_{11a}$, $LP_{21}$, and $LP_{02}$ modes, respectively. The spatial shaping performed in SM MUX/DMUX $445_2$ between port **C** and ports **1-4** thereof corresponds to the $LP_{21a}$, $LP_{02}$, $LP_{01}$, and $LP_{11}$ modes, respectively.

Note that, in the receive (DMUX) direction, the spatial shaping does not need to be matched to a particular one of the degenerate modes, but rather, can be configured to treat the degenerate modes as a group, with all modes of the group being passed through to the corresponding photodetector. For example, the spatial shaping performed in SM MUX/DMUX $445_1$ between port **C** and port **3** thereof can be configured to pass both the $LP_{21a}$ mode and $LP_{21b}$ mode to photodetector $460_{11}$. Similarly, the spatial shaping performed in SM MUX/DMUX $445_2$ between port **C** and port **4** thereof can be configured to pass both the $LP_{11a}$ mode and $LP_{11b}$ mode to photodetector $460_{22}$. The spatial shaping performed in this manner can reduce or prevent a loss (e.g., fading) of the signal at the receiver due to the energy exchange between the degenerate modes of a group during signal propagation in the fiber. For example, due to such energy exchange, the $LP_{11a}$ mode launched into optical fiber **304** by transceiver **310$_1$** may be received as a mixture of the $LP_{11a}$ and $LP_{11b}$ modes by transceiver **310$_2$**, and the $LP_{21a}$ mode launched into optical fiber **304** by transceiver **310$_2$** may be received as a mixture of the $LP_{21a}$ and $LP_{21b}$ modes by transceiver **310$_1$**. In some situations, substantially all of the received signal energy may be concentrated in a single one of the degenerate modes of the group. In some other situations, the received signal energy may be distributed in some manner between two or more degenerate modes of the group.

A person of ordinary skill in the art will understand that other mode combinations may alternatively be selected for configuring SM MUX/DMUX **445$_1$** and SM MUX/DMUX **445$_2$** in alternative embodiments.

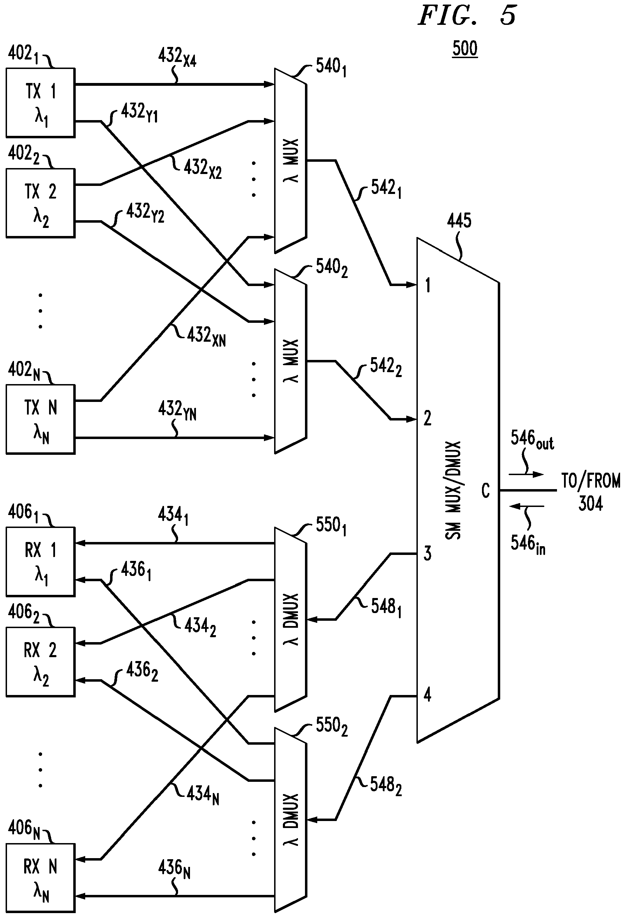

FIG. 5 shows a block diagram of an optical transceiver **500** according to an embodiment. Two optical transceivers **500** can be used, e.g., in system **300** (FIG. 3) in place of optical transceivers **310$_1$** and **310$_2$**. The use of optical transceivers **500** enables system **300** to transmit optical signals using wavelength-division multiplexing (WDM) in addition to SDM, while providing most of the above-indicated benefits of reduced inter-mode crosstalk for each of the different carrier wavelengths used therein.

In an example embodiment, optical transceiver **500** includes: (i) N instances of optical transmitter **402** (see FIG. 4), which are labeled in FIG. 5 using reference numerals **402$_1$-402$_N$**; and (ii) N instances of optical receiver **406** (see FIG. 4), which are labeled in FIG. 5 using reference numerals **406$_1$-406$_N$**. Transmitters **402$_1$-402$_N$** are connected to ports **1** and **2** of an SM MUX/DMUX **445** (also see FIG. 4) by way of wavelength multiplexers **540$_1$** and **540$_2$** as indicated in FIG. 5. Receivers **406$_1$-406$_N$** are connected to ports **3** and **4** of SM MUX/DMUX **445** by way of wavelength demultiplexers **550$_1$** and **550$_2$** as further indicated in FIG. 5. In an example embodiment, the number N can be on the order of ten.

Each of transmitters **402$_n$** (where n=1, 2, ..., N) is configured to generate output optical signals **432$_{Xn}$** and **432$_{Yn}$** of a respective carrier wavelength $\lambda_n$, with different transmitters **402$_n$** being configured to use different carrier wavelengths. Wavelength multiplexer **540$_1$** is configured to multiplex optical signals **432$_{X1}$-432$_{XN}$**, thereby generating an X-polarized WDM signal **542$_1$**, which is then applied to port **1** of SM MUX/DMUX **445**. Wavelength multiplexer **540$_2$** is similarly configured to multiplex optical signals **432$_{Y1}$-432$_{YN}$**, thereby generating a Y-polarized WDM signal **542$_2$**, which is then applied to port **2** of SM MUX/DMUX **445**.

SM MUX/DMUX **445** operates to couple WDM signals **542$_1$** and **542$_2$** into the two corresponding guided modes or groups of degenerate modes of optical fiber **304**, e.g., as explained above in reference to FIG. 4, thereby launching a corresponding optical SDM-WDM signal **546$_{out}$** into that optical fiber. SM MUX/DMUX **445** further operates to output optical WDM signals **548$_1$** and **548$_2$** at ports **3** and **4**, respectively, in response to an optical SDM-WDM signal **546$_{in}$** received from optical fiber **304**. In an example embodiment, optical SDM-WDM signal **546$_{in}$** can be launched into optical fiber **304**, at the remote end thereof, by another instance of optical transceiver **500**.

A person of ordinary skill in the art will understand that, as long as carrier wavelengths $\lambda_1$-$\lambda_N$ are all located within a relatively narrow spectral band, SM MUX/DMUX **445** can be configured to handle all of the corresponding optical signals in a sufficiently accurate manner as a bundle (i.e., in a wavelength-multiplexed state), e.g., using the same set of phase/intensity masks. Such handling can be implemented in both transmit and receive directions.

Wavelength demultiplexer **550$_1$** is configured to demultiplex optical WDM signal **548$_1$**, thereby generating optical signals **434$_1$-434$_N$**, which are then applied to the first photodetectors of receivers **406$_1$-406$_N$**, respectively (also see FIG. 4). Wavelength demultiplexer **550$_2$** is similarly configured to demultiplex optical WDM signal **548$_2$**, thereby generating optical signals **436$_1$-436$_N$**, which are then applied to the second photodetectors of receivers **406$_1$-406$_N$**, respectively (also see FIG. 4). In an example embodiment, wavelength demultiplexers **550$_1$** and **550$_2$** are connected such that each of receivers **406$_1$-406$_N$** receives light of the same respective carrier wavelength from both of the wavelength demultiplexers.

FIG. 6 shows a block-diagram of an electro-optical device **600** that can be used, e.g., in an optical transmitter **402** (FIG. 4 or 5), according to an embodiment. For illustration purposes and without any implied limitations, device **600** is shown in FIG. 6 in a configuration corresponding to FIG. 4, wherein device **600** can be used to generate modulated optical beams **422$_{1i}$** and **422$_{2i}$**. A person of ordinary skill in the art will understand that device **600** can also be used in other configurations, e.g., corresponding to FIG. 1 and/or FIG. 5.

Device **600** is an integrated device that comprises a laser **610** and optical modulators **620$_1$** and **620$_2$** implemented on a common substrate or carrier **602**. Laser **610** can be a distributed feedback laser that feeds the generated light into optical modulators **620$_1$** and **620$_2$**, with the corresponding optical beams propagating in opposite directions. Optical modulator **620$_1$** operates to modulate one of the optical beams in response to a drive signal **618$_1$**. The resulting modulated optical beam is coupled into an optical waveguide **604** that directs it to external circuits, e.g., as modulated optical beam **422$_{1i}$**. Optical modulator **620$_2$** similarly operates to modulate the other one of the optical beams in response to a drive signal **618$_2$**. The resulting modulated optical beam is coupled into an optical waveguide **606** that directs it to external circuits, e.g., as modulated optical beam **422$_{2i}$**.

In an example embodiment, each of optical modulators **620$_1$** and **620$_2$** can be an electro-absorption modulator.

According to an example embodiment disclosed above, e.g., in the summary section and/or in reference to any one or any combination of some or all of FIGs. 1-6, provided is an apparatus comprising: an optical transmitter (e.g., **402**, FIGs. 4-5; **102**, FIG. 1) configured to generate a first modulated optical signal (e.g., $432_{Xi}$, FIGs. 4-5) and a second modulated optical signal (e.g., $432_{Yi}$, FIGs. 4-5), each of the first and second modulated optical signals having a first carrier wavelength and being generated using a different respective data stream (e.g., $418_{1i}$ and $418_{2i}$, FIG. 4); and a spatial-mode multiplexer (e.g., **445**, FIGs. 4-5; **140**, FIG. 1) configured to optically couple the optical transmitter to an optical fiber in a manner that enables the optical transmitter to: transmit the first modulated optical signal by way of a first guided mode of the optical fiber; and transmit the second modulated optical signal by way of a second guided mode of the optical fiber, the second guided mode being different from the first guided mode; and wherein the optical transmitter and the spatial-mode multiplexer are connected such that a polarization of light of the first modulated optical signal being coupled into the first guided mode and a polarization of light of the second modulated optical signal being coupled into the second guided mode are mutually orthogonal.

As used herein and in the claims, the term "spatial-mode multiplexer" should be construed to cover both a unidirectional device, such as the SM MUX **140** (FIG. 1), and a bidirectional device, such as the SM MUX/DMUX **445** (FIGs. 4-5).

In some embodiments of the above apparatus, the optical transmitter and the spatial-mode multiplexer are connected such that: the polarization of the light of the first modulated optical signal being coupled into the first guided mode is a first (e.g., X) linear polarization; and the polarization of light of the second modulated optical signal being coupled into the second guided mode is a second (e.g., Y) linear polarization, the second linear polarization being orthogonal to the first linear polarization.

In some embodiments of any of the above apparatus, the optical transmitter comprises: a first polarization filter (e.g., $130_1$, FIG. 1; $430_{1i}$, FIG. 4) configured to filter the first modulated optical signal such that the first modulated optical signal so filtered has a first polarization; and a second polarization filter (e.g., $130_2$, FIG. 1; $430_{2i}$, FIG. 4) configured to filter the second modulated optical signal such that the second modulated optical signal so filtered has a second polarization that is orthogonal to the first polarization.

In some embodiments of any of the above apparatus, the optical transmitter further comprises a polarization rotator (e.g., **124**, FIG. 1; $424_i$, FIG. 4) serially connected with the second polarization filter and configured to rotate by approximately 90 degrees (e.g., to within ±10 degrees) a polarization of light passing therethrough.

In some embodiments of any of the above apparatus, the optical transmitter further comprises: a first optical modulator (e.g., $120_1$, FIG. 1; $420_{1i}$, FIG. 4) configured to generate the first modulated optical signal in response to a first data stream (e.g., $418_{1i}$, FIG. 4); and a second optical modulator (e.g., $120_2$, FIG. 1; $420_{2i}$, FIG. 4) configured to generate the second modulated optical signal in response to a second data stream (e.g., $418_{2i}$, FIG. 4) that is different from the first data stream.

In some embodiments of any of the above apparatus, the apparatus further comprises a laser (e.g., **110**, FIG. 1; **610**, FIG. 6); and wherein each of the first and second optical modulators is connected to modulate light received from the laser to generate a respective one of the first and second modulated optical signals, the light received from the laser having the first carrier wavelength.

In some embodiments of any of the above apparatus, the apparatus further comprises a first laser (e.g., $410_{1i}$, FIG. 4) and a second laser (e.g., $410_{2i}$, FIG. 4); wherein the first optical modulator is connected to modulate light received from the first laser to generate the first modulated optical signal, the light received from the first laser nominally having the first carrier wavelength; and wherein the second optical modulator is connected to modulate light received from the second laser to generate the second modulated optical signal, the light received from the second laser nominally having the first carrier wavelength.

In some embodiments of any of the above apparatus, the apparatus further comprises an optical receiver (e.g., $406_i$, FIG. 4); and wherein the spatial-mode multiplexer is further configured to optically couple the optical receiver to the optical fiber in a manner that enables the optical receiver to: receive a third modulated optical signal transmitted by way of a third guided mode of the optical fiber, the third guided mode being different from each of the first and second guided modes; and receive a fourth modulated optical signal transmitted by way of a fourth guided mode of the optical fiber, the fourth guided mode being different from each of the first, second, and third guided modes.

In some embodiments of any of the above apparatus, the apparatus further comprises a first wavelength demultiplexer (e.g., $550_1$, FIG. 5) connected between the spatial-mode multiplexer and the optical receiver and configured to direct the third modulated optical signal to the optical receiver, the third modulated optical signal having the first carrier wavelength.

In some embodiments of any of the above apparatus, the apparatus further comprises a second wavelength demultiplexer (e.g., $550_2$, FIG. 5) connected between the spatial-mode multiplexer and the optical receiver and configured to direct the fourth modulated optical signal to the optical receiver, the fourth modulated optical signal having the first carrier wavelength.

In some embodiments of any of the above apparatus, the apparatus further comprises one or more additional optical receivers (e.g., $406_2$-$406_N$, FIG. 5), each connected to a different respective output of the first wavelength demultiplexer and configured to receive light from the optical fiber by way of the spatial-mode multiplexer.

In some embodiments of any of the above apparatus, the apparatus further comprises a first wavelength multiplexer (e.g., $540_1$, FIG. 5) connected between the optical transmitter and the spatial-mode multiplexer; and wherein the optical transmitter is connected to direct the first modulated optical signal to the spatial-mode multiplexer by way of the first wavelength multiplexer.

In some embodiments of any of the above apparatus, the apparatus further comprises a second wavelength multiplexer (e.g., $540_2$, FIG. 5) connected between the optical transmitter and the spatial-mode multiplexer; and wherein the optical transmitter is connected to direct the second modulated optical signal to the spatial-mode multiplexer by way of the second wavelength multiplexer.

In some embodiments of any of the above apparatus, the apparatus further comprises one or more additional optical transmitters (e.g., $402_2$-$402_N$, FIG. 5), each connected to a different respective input of the first wavelength multiplexer; and wherein the spatial-mode multiplexer is further configured to optically couple each of the one or more additional optical transmitters to the optical fiber in a manner that enables each of the one or more additional optical transmitters to transmit a respective modulated optical signal by way of the first guided mode of the optical fiber, each of the one or more respective modulated optical signals having a different respective carrier wavelength that is different from the first carrier wavelength.

In some embodiments of any of the above apparatus, the spatial-mode multiplexer is further configured to optically couple the optical transmitter to the optical fiber such that the first and second guided modes do not belong to a same group of degenerate modes of the optical fiber.

According to another example embodiment disclosed above, e.g., in the summary section and/or in reference to any one or any combination of some or all of FIGs. 1-6, provided is an optical communication method comprising the steps of: (i) configuring an optical transmitter (e.g., 402, FIG. 4) to generate a first modulated optical signal (e.g., $432_{Xi}$, FIG. 4) and a second modulated optical signal (e.g., $432_{Yi}$, FIG. 4), each of the first and second modulated optical signals having a first carrier wavelength and being generated using a different respective data stream (e.g., $418_{1i}$, $418_{2i}$, FIG. 4); and (ii) configuring a spatial-mode multiplexer (e.g., 445, FIG. 4) to optically couple the optical transmitter to an optical fiber in a manner that enables the optical transmitter to: transmit the first modulated optical signal by way of a first guided mode of the optical fiber; and transmit the second modulated optical signal by way of a second guided mode of the optical fiber, the second guided mode being different from the first guided mode; and wherein the optical transmitter and the spatial-mode multiplexer are connected such that a polarization of light of the first modulated optical signal being coupled into the first guided mode and a polarization of light of the second modulated optical signal being coupled into the second guided mode are mutually orthogonal.

While this disclosure includes references to illustrative embodiments, this specification is not intended to be construed in a limiting sense.

Although various embodiments have been described in reference to orthogonal linear (e.g., X and Y) polarizations, other (e.g., circular, elliptical, etc.) orthogonal polarizations can also be used in some alternative embodiments.

Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

## Claims

1. An apparatus comprising:

an optical transmitter (402) configured to generate a first modulated optical signal ($432_{Xi}$) and a second modulated optical signal ($432_{Yi}$), each of the first and second modulated optical signals having a first carrier wavelength and being generated using a different respective data stream ($418_{1i}$, $418_{2i}$); and
a spatial-mode multiplexer (445) configured to optically couple the optical transmitter to an optical fiber in a manner that enables the optical transmitter to:

transmit the first modulated optical signal by way of a first guided mode of the optical fiber; and
transmit the second modulated optical signal by way of a second guided mode of the optical fiber, the second guided mode being different from the first guided mode; and

wherein the optical transmitter and the spatial-mode multiplexer are connected such that a polarization of light of the first modulated optical signal being coupled into the first guided mode and a polarization of light of the second modulated optical signal being coupled into the second guided mode are mutually orthogonal.

2. The apparatus of claim 1, wherein the optical transmitter and the spatial-mode multiplexer are connected such that:

the polarization of the light of the first modulated optical signal being coupled into the first guided mode is a first linear polarization; and
the polarization of light of the second modulated optical signal being coupled into the second guided mode is a second linear polarization, the second linear polarization being orthogonal to the first linear polarization.

3. The apparatus of claim 1, wherein the optical transmitter comprises:

a first polarization filter ($430_{1i}$) configured to filter the first modulated optical signal such that the first modulated optical signal so filtered has a first polarization; and
a second polarization filter ($430_{12}$) configured to filter the second modulated optical signal such that the second modulated optical signal so filtered has a second polarization that is orthogonal to the first polarization.

4. The apparatus of claim 3, wherein the optical transmitter further comprises a polarization rotator ($424_i$) serially connected with the second polarization filter and configured to rotate by approximately 90 degrees a polarization of light passing therethrough.

5. The apparatus of claim 3, wherein the optical transmitter further comprises:

a first optical modulator ($420_{1i}$) configured to generate the first modulated optical signal in response to a first data stream; and
a second optical modulator ($420_{2i}$) configured to generate the second modulated optical signal in response to a second data stream that is different from the first data stream.

6. The apparatus of claim 5, further comprising a laser (610); and
wherein each of the first and second optical modulators is connected to modulate light received from the laser to generate a respective one of the first and second modulated optical signals, the light received from the laser having the first carrier wavelength.

7. The apparatus of claim 5, further comprising a first laser ($410_{1i}$) and a second laser ($410_{2i}$);
wherein the first optical modulator is connected to modulate light received from the first laser to generate the first modulated optical signal, the light received from the first laser nominally having the first carrier wavelength; and
wherein the second optical modulator is connected to modulate light received from the second laser to generate the second modulated optical signal, the light received from the second laser nominally having the first carrier wavelength.

8. The apparatus of claim 1, further comprising an optical receiver (406); and
wherein the spatial-mode multiplexer is further configured to optically couple the optical receiver to the optical fiber in a manner that enables the optical receiver to:

　　receive a third modulated optical signal transmitted by way of a third guided mode of the optical fiber, the third guided mode being different from each of the first and second guided modes; and

　　receive a fourth modulated optical signal transmitted by way of a fourth guided mode of the optical fiber, the fourth guided mode being different from each of the first, second, and third guided modes.

9. The apparatus of claim 8, further comprising a first wavelength demultiplexer ($550_1$) connected between the spatial-mode multiplexer and the optical receiver and configured to direct the third modulated optical signal to the optical receiver, the third modulated optical signal having the first carrier wavelength.

10. The apparatus of claim 9, further comprising a second wavelength demultiplexer ($550_2$) connected between the spatial-mode multiplexer and the optical receiver and configured to direct the fourth modulated optical signal to the optical receiver, the fourth modulated optical signal having the first carrier wavelength.

11. The apparatus of claim 9, further comprising one or more additional optical receivers ($406_2$-$406_N$), each connected to a different respective output of the first wavelength demultiplexer and configured to receive light from the optical fiber by way of the spatial-mode multiplexer.

12. The apparatus of claim 1, further comprising a first wavelength multiplexer ($540_1$) connected between the optical transmitter and the spatial-mode multiplexer; and

wherein the optical transmitter is connected to direct the first modulated optical signal to the spatial-mode multiplexer by way of the first wavelength multiplexer.

13. The apparatus of claim 12, further comprising a second wavelength multiplexer ($540_2$) connected between the optical transmitter and the spatial-mode multiplexer; and

wherein the optical transmitter is connected to direct the second modulated optical signal to the spatial-mode multiplexer by way of the second wavelength multiplexer.

14. The apparatus of claim 12, further comprising one or more additional optical transmitters ($402_2$-$402_N$), each connected to a different respective input of the first wavelength multiplexer; and

wherein the spatial-mode multiplexer is further configured to optically couple each of the one or more additional optical transmitters to the optical fiber in a manner that enables each of the one or more additional optical transmitters to transmit a respective modulated optical signal by way of the first guided mode of the optical fiber, each of the one or more respective modulated optical signals having a different respective carrier wavelength that is different from the first carrier wavelength.

15. The apparatus of claim 1, wherein the spatial-mode multiplexer is further configured to optically couple the optical transmitter to the optical fiber such that the first and second guided modes do not belong to a same group of degenerate modes of the optical fiber.

*FIG. 1*

100

## FIG. 2A

## FIG. 2B

*FIG. 3*

300

*FIG. 4*

i = 1, 2
j = 1, 2
i ≠ j

*FIG. 5*

500

**FIG. 6**

<u>600</u>

Europäisches
Patentamt

European
Patent Office

Office européen
des brevets

**EUROPEAN SEARCH REPORT**

Application Number

EP 17 21 0541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 556 606 A2 (ALCATEL LUCENT [FR]) 13 February 2013 (2013-02-13) * figures 3D, 4A * * page 7, line 4 - line 10 * * page 15, line 9 - page 16, line 11 * ----- | 1-15 | INV. H04B10/2581 H04B10/532 H04B10/50 H04J14/04 H04J14/06 H04B10/25 |
| A | US 2016/164612 A1 (WILKS JOHN [US] ET AL) 9 June 2016 (2016-06-09) * paragraph [0006] * ----- | 10-14 | |
| A | EP 2 249 202 A1 (HONEYWELL INT INC [US]) 10 November 2010 (2010-11-10) * figure 1 * ----- | 1-15 | |

TECHNICAL FIELDS
SEARCHED      (IPC)

H04B
H04J

The present search report has been drawn up for all claims

| Place of search | Date of completion of the search | Examiner |
|---|---|---|
| Munich | 12 June 2018 | Ganzmann, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 21 0541

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2018

| Patent document cited in search report | | Publication date | Patent family member(s) | | Publication date |
|---|---|---|---|---|---|
| EP 2556606 | A2 | 13-02-2013 | CN | 102835044 A | 19-12-2012 |
| | | | EP | 2556606 A2 | 13-02-2013 |
| | | | JP | 5665967 B2 | 04-02-2015 |
| | | | JP | 2013526137 A | 20-06-2013 |
| | | | KR | 20120135309 A | 12-12-2012 |
| | | | SG | 184461 A1 | 29-11-2012 |
| | | | TW | 201233084 A | 01-08-2012 |
| | | | WO | 2011126814 A2 | 13-10-2011 |
| US 2016164612 | A1 | 09-06-2016 | CN | 106019495 A | 12-10-2016 |
| | | | DE | 102015121009 A1 | 09-06-2016 |
| | | | JP | 2016118769 A | 30-06-2016 |
| | | | US | 2016164612 A1 | 09-06-2016 |
| EP 2249202 | A1 | 10-11-2010 | EP | 2249202 A1 | 10-11-2010 |
| | | | JP | 2010262299 A | 18-11-2010 |
| | | | US | 2010284054 A1 | 11-11-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8705913 B
- US 8355638 B
- US 8320769 B
- US 7174067 B
- US 7639909 B
- US 20160233959 A
- US 20150309249 A

### Non-patent literature cited in the description

- **DANIELE MELATI ; ANDREA ALIPPI ; ANDREA MELLONI.** Reconfigurable Photonic Integrated Mode (De)Multiplexer for SDM Fiber Transmission. *Optics Express,* 2016, vol. 24, 12625-12634
- **A. M. VELAZQUEZ-BENITEZ ; J. ́ E. ANTONIO-LÓPEZ ; J. C. ALVARADO-ZACARIAS et al.** Scaling the Fabrication of Higher Order Photonic Lanterns Using Microstructured Preforms. *ECOC,* 2015
- **KAOUTAR BENYAHYA ; CHRISTIAN SIMONNEAU ; AMIRHOSSEIN GHAZISAEIDI et al.** 5Tb/s Transmission over 2.2 km of Multimode OM2 Fiber with Direct Detection Thanks to Wavelength and Mode Group Multiplexing. *OFC,* 2017
- **R. RYF, M. A. MESTRE ; A. H. GNAUCK et al.** Low-Loss Mode Coupler for Mode-Multiplexed Transmission in Few-Mode Fiber. *OFC/NFOEC,* 2012
- **NICOLAS BARRE ; BERTRAND DENOLLE ; PU JIAN et al.** Broadband, Mode-Selective 15-Mode Multiplexer Based on Multi-Plane Light Conversion. *OFC,* 2017